# EUROPÄISCHE PATENTSCHRIFT

(11) **EP 2 582 888 B1**
(45) Veröffentlichungstag und Bekanntmachung des Hinweises auf die Patenterteilung: **27.01.2016**
(21) Anmeldenummer: 11712485.9
(22) Anmeldetag: 31.03.2011
(51) Int. Cl.: E03C 1/04, F16L 27/047

(54) **HANDBRAUSE FÜR ARMATUR MIT AUSZIEHBAREM BRAUSESCHLAUCH**
HANDHELD SHOWER FOR A FAUCET WITH AN EXTENSIBLE SHOWER HOSE
DOUCHETTE POUR ROBINETTERIE DOTÉE D'UN TUYAU EXTRACTIBLE

(30) Priorität: 14.03.2011 US 201113047107; 03.03.2011 DE 202011003476 U; 18.06.2010 US 818666
(43) Veröffentlichungstag der Anmeldung: 24.04.2013
(73) Patentinhaber: Neoperl GmbH, 79379 Müllheim (DE)
(72) Erfinder: GRETHER, Hermann, 79379 Müllheim (DE); WEIS, Christoph, 79379 Müllheim (DE)
(74) Vertreter: Börjes-Pestalozza, Henrich
(86) Internationale Anmeldenummer: PCT/EP2011/001628
(87) Internationale Veröffentlichungsnummer: WO 2011/157311

(56) Entgegenhaltungen:
- WO-A1-2004/007854
- WO-A1-2008/067879
- WO-A2-2007/090311
- DE-A1- 3 133 267
- DE-U1-202006 010 072
- US-A1- 2005 156 062

## Beschreibung

Die Erfindung betrifft eine Handbrause-Garnitur mit einer Handbrause, die über eine Kupplung mit einer flexiblen Schlauchleitung verbunden ist, wobei die zur Verbindung von Handbrause und Schlauchleitung vorgesehene Kupplung einen Schlauchanschluss mit einem Kugelgelenk aufweist, welches ein erstes und ein zweites Gelenkteil hat, die gelenkig miteinander verbunden sind und miteinander verbundene Flüssigkeitskanäle aufweisen und von denen ein Gelenkteil einen Schlauchnippel trägt und am anderen Gelenkteil ein Innen- oder Außengewinde vorgesehen ist, wobei das erste Gelenkteil mit einem kugelkalotten- oder kugelsegmentförmigen Stirnendbereich seiner Wandung zwischen einer formangepassten Gelenkpfanne am zweiten Gelenkteil einerseits und einem Gelenkkopf an einem in einer Innenhöhlung des ersten Gelenkteiles vorgesehenen Halteelement andererseits verschwenkbar gehalten ist, wobei das Halteelement mit einem am zweiten Gelenkteil angreifenden Verbindungsschaft eine Durchstecköffnung des ersten Gelenkteiles durchsetzt, wobei das Halteelement die Flüssigkeitskanäle des ersten Gelenkteiles sowie des zweiten Gelenkteiles miteinander verbindet, und wobei der Gelenkkopf des Halteelements eine kugelsegmentförmige Außenkontur hat.

Handbrausen, die als Dusch- oder als Küchenbrausen eingesetzt werden können, sind bereits in verschiedenen Ausführungen bekannt. Die vorbekannten Handbrausen sind regelmäßig über Schraubkupplung mit einer flexiblen Schlauchleitung verbunden, die ihrerseits an das Wasserleitungsnetz angeschlossen ist. Die vorbekannten Handbrausen weisen meist einen Brausegriff auf, der an seinem, einem Brausekopf abgewandten Endbereich ein Außengewinde trägt. An der Schlauchleitung ist ein Schlauchanschluss vorgesehen, der mittels einer, ein Innengewinde tragenden Überwurfmutter am Außengewinde der Handbrause festgeschraubt werden kann.

Die bei den vorbekannten Handbrausen zwischen Brausegriff und Schlauchleitung vorgesehene Schraubverbindung lässt jedoch ein Verdrehen der Handbrause in Bezug auf die Längsachse der Schlauchleitung nicht ohne weiteres zu, weil andernfalls die Schraubverbindung zwischen der Handbrause und der Schlauchleitung sich unbeabsichtigt lösen und undicht werden kann. Die vorbekannten Handbrausen zeigen auch regelmäßig nahe der Einspann- oder Kupplungsstelle zum Brausegriff einen Verschleiß durch Biegeüberlastung quer zur Längsachse, die durch die Bewegung der Handbrause während der Benutzung verursacht wird.

Aus der US 2005/0156062 A1 ist bereits eine Handbrause-Garnitur vorbekannt, die einen Armaturenkorpus mit einem Auslaufrohr hat, welches Auslaufrohr bis über ein Waschbecken gebogen ist. Am freien Ende des Auslaufrohres ist eine Handbrause lösbar befestigbar. Diese Handbrause kann vom Auslaufrohr gelöst und anschließend bei Bedarf frei bewegt werden. Die Handbrause ist dazu über eine Kupplung mit einer flexiblen Schlauchleitung verbunden, die im Armaturenkorpus an die Wasserzufuhr angeschlossen ist. Um die Handbrause relativ zur Schlauchleitung verschwenken und ausrichten zu können, weist die zur Verbindung von Handbrause und Schlauchleitung vorgesehene Kupplung einen Schlauchanschluss mit einem Kugelgelenk auf. Das Kugelgelenk hat ein erstes und ein zweites Gelenkteil, die gelenkig miteinander verbunden sind und miteinander verbundene Flüssigkeitskanäle aufweisen. Während das erste Gelenkteil einen Schlauchnippel trägt, ist am zweiten Gelenkteil ein Innen- oder Außengewinde vorgesehen, an dem die Handbrause angeschraubt werden kann. Dabei ist das zweite Gelenkteil als Schraubhülse ausgebildet, die in ihrem Hülseninneren eine Gelenkpfanne aufweist und an ihrem Hülsenumfang das Innengewinde trägt. Nachteilig ist jedoch, dass das als Schraubhülse ausgestaltete zweite Gelenkteil nicht nur das erste Gelenkteil zwischen sich und der mit ihrem Innengewinde verbundenen Handbrause dicht einzuspannen -, sondern gleichzeitig auch die leichte Verdrehbarkeit der Gelenkteile des Kugelgelenks sicherzustellen hat. Dabei besteht die Gefahr, dass bei einem Verdrehen der Gelenkteile zueinander unbeabsichtigt auch die Schraubverbindung des zweiten Gelenkteiles gelöst wird, so dass sich die Kupplung lockert und undicht werden kann.

Aus der DE 20 2006 010 072 U1 ist bereits eine Handbrause-Garnitur vorbekannt, bei welcher der Brauseschlauch mit der Handhabe über ein Kugelgelenk verbunden ist. Das Kugelgelenk weist zwei Gelenkteile auf, von denen ein erstes Gelenkteil einen kugelsegment- oder kugelkalottenförmigen Stirnendbereich hat und ein zweites Gelenkteil eine Gelenkpfanne trägt. Zwischen diesen Gelenkteilen ist ein Halteelement schwenkbar gehalten, das über einen Verbindungsschaft an einem zuströmseitigen Teil angreift. Da das Kugelgelenk über den Verbindungsschaft mit einem zuströmseitigen Teil verbunden ist, und da im Bereich des Verbindungsschaftes ein Absatz gebildet ist, wird die Handhabung der vorbekannten Handbrause-Garnitur erschwert und das Erscheinungsbild dieser Handbrause-Garnitur beeinträchtigt.

Aus der WO 2008/067879 A1 und der US 2005/0156062 A1 sind bereits verschiedene Auslaufmundstücke vorbekannt, die am Wasserauslauf einer sanitären Auslaufarmatur befestigt werden können. Diese Auslaufmundstücke weisen ein Kugelgelenk auf, um die den Wasserauslauf der Auslaufarmatur bildende Austrittsöffnung bei Bedarf ausrichten zu können. Die Kugelgelenke der vorbekannten Auslaufmundstücke haben ein erstes und ein zweites Gelenkteil, wobei das erste Gelenkteil mit einem segmentförmigen Stirnendbereich an einer Gelenkpfanne des zweiten Gelenkteiles anliegt und mittels einem in einer Innenhöhlung des ersten Gelenkteiles angeordneten Halteelement schwenkbar gehalten wird. Um das erste Gelenkteil zwischen dem Halteelment und dem zweiten Gelenkteil schwenkbar lagern zu können, weist das Halteelement einen kugeligen Gelenkkopf auf. Da bei diesen Auslaufmundstücken die zwischen dem Halteelement und dem Innenumfang des ersten Gelenkteiles vorgesehene Ringdichtung weit oberhalb des Äquators des kugeligen Gelenkkopfes des Halteelements anliegt, wirken auf diese Ringdichtung nur nur radiale, sondern auch axiale Reibkräfte ein, welche die Beweglichkeit und Handhabung dieser Auslaufmundstücke erschweren können.

Es besteht daher insbesondere die Aufgabe, eine Handbrause-Garnitur der eingangs erwähnten Art zu schaffen, die sich durch eine größere Beweglichkeit und insbesondere auch durch eine Verdrehbarkeit zwischen Handbrause und Schlauchleitung auszeichnet, wobei die erfindungsgemäße Schlauchleitung auch bei höherem Drücken eine leichtgängige Verschwenkbarkeit des ersten Gelenkteiles in Relation zum zweiten Gelenkteil sowie zum Haltelement nahezu druckunabhängig gewährleisten soll.

Die erfindungsgemäße Lösung dieser Aufgabe besteht bei der Handbrause-Garnitur der eingangs erwähnten Art insbesondere darin, dass eine Ringnut im Bereich des größten Außenumfangs der kugelsegmentförmigen Außenkontur des Gelenkkopfes am Halteelement oder des größten Innenumfangs des kugelkalotten- oder kugelsegmentförmigen Stirnendbereichs des ersten Gelenkteiles angeordnet ist, und dass in dieser Ringnut eine Ringdichtung vorgesehen ist.

Das in der Kupplung der erfindungsgemäßen Handbrause-Garnitur verwendete Kugelgelenk weist zwei gelenkig miteinander verbundene Gelenkteile auf, von denen ein erstes Gelenkteil einen kugelkalotten- beziehungsweise kugelsegmentförmigen oder dergleichen kugeligen Stirnendbereich hat. Dabei ist das erste Gelenkteil mit seinem stirnseitigen und kugelig ausgestalteten Stirnendbereich zwischen einer formangepassten Gelenkpfanne am zweiten Gelenkteil einerseits und einem Gelenkkopf an einem in der Innenhöhlung des ersten Gelenkteiles vorgesehenen Halteelement andererseits verschwenkbar gehalten. Da das erste Gelenkteil somit zwischen dem zweiten Gelenkteil und dem Halteelement sicher und fest gehalten ist und da das erste Gelenkteil nicht bloß mit einem Dichtring gesichert wird, verfügt das Kugelgelenk über eine vergleichsweise hohe Funktionalität, da die Halte- und die Dichtfunktion getrennt voneinander sind und jeweils für sich optimiert werden können. Es ist ein besonderer Vorteil dieser weiterbildenden Ausführungsform, dass auch die Haltefunktion einerseits und die Verdrehbarkeit andererseits getrennt von einander sind, sodass die Handbrause gegenüber der Schlauchleitung verdreht werden kann, ohne dass ein unbeabsichtigtes Lösen einer im Bereich der Kupplung vorgesehenen Schraubverbindung zu befürchten ist. Da das erste Gelenkteil, das auf der Zuströmseite oder der Abströmseite des Kugelgelenks angeordnet sein kann, in eine Gelenkpfanne des zweiten Gelenkteiles verschwenkbar angeordnet ist, können erstes Gelenkteil und zweites Gelenkteil ohne größere Übergänge und insbesondere ohne ästhetisch störende Durchmessersprünge miteinander verbunden werden. Dabei durchsetzt das Halteelement mit einem am zweiten Gelenkteil angreifenden Verbindungsschaft eine Durchstecköffnung des ersten Gelenkteiles, wobei das Halteelement die Flüssigkeitskanäle des ersten Gelenkteiles sowie des Auslaufteiles miteinander verbindet.

Das zwischen Handbrause und Schlauchleitung zwischengeschaltete Kugelgelenk erhöht nicht nur die Beweglichkeit und Gelenkigkeit zwischen der Handbrause und der flexiblen Schlauchleitung, - das Kugelgelenk erlaubt vielmehr auch ein Verdrehen der Handbrause relativ zur Schlauchleitung, ohne dass ein Lösen der zwischen Handbrause und Schlauchleitung vorgesehenen Schraubverbindung oder dergleichen Kupplung befürchtet werden müsste. Erfindungsgemäß ist vorgesehen, dass eine Ringnut im Bereich des größten Außenumfangs der kugelsegmentförmigen Außenkontur des Gelenkkopfes am Halteelement oder des größten Innenumfangs des kugelkalotten- oder kugelsegmentförmigen Stirnendbereichs des ersten Gelenkteiles angeordnet ist, in welcher Ringnut eine Ringdichtung vorgesehen ist. Durch diese Anordnung der Ringnut wird die darin eingesetzte Ringdichtung nur einer radialen Belastung -, nicht aber einer axialen Belastung ausgesetzt, so dass die Ringdichtung daher nur geringen Reibkräften unterliegt. Durch diese besondere Anordnung der für die Ringdichtung vorgesehenen Ringnut unterliegt die darin eingelegte Ringdichtung auch bei höheren Drücken geringeren Reibkräften und eine leichtgängige Verschwenkbarkeit des ersten Gelenkteiles in Relation zum zweiten Gelenkteil sowie zum Halteelement wird nahezu druckunabhängig gewährleistet. Da die im Bereich des Äquators angeordnete Ringnut praktisch rechteckig eingearbeitet werden kann, ist diese Ringnut einfacher herzustellen und auszumessen. Da das Halteelement länger ausgestaltet werden kann und da somit die Reib- und Kontaktfläche des ersten Gelenkteiles am Halteelement einerseits und am zweiten Gelenkteil andererseits entsprechend größer ausgestaltet werden kann, wird einem unerwünschten Verschleiß dieser Bauteile entgegengewirkt.Eine konstruktiv einfache und bevorzugte Ausführungsform gemäß der Erfindung sieht vor, dass die zur Verbindung von Handbrause und Schlauchleitung vorgesehene Kupplung als Schraubkupplung ausgebildet ist, die an der Handbrause einen Brauseanschluss mit Außen- oder Innengewinde hat, welches Außen- oder Innengewinde mit dem, an dem ersten Gelenkteil des Schlauchanschlusses der Schlauchleitung vorgesehenen Innen- oder Außengewinde vorzugsweise lösbar verbindbar ist. Ist dabei an der Handbrause ein Brauseanschluss mit Außengewinde und an der Schlauchleitung ein Schlauchanschluss mit komplementärem Innengewinde vorgesehen, lassen sich an der erfindungsgemäß ausgestalteten Schlauchleitung die handelsüblichen Handbrausen montieren.

Dasselbe gilt für rotationssteife Steckverbindungen oder - kupplungen in diesem Bereich. Vorteile der besseren Beweglichkeit bestehen auch bei rotationsfreien Verbindungen oder Kupplungen, - selbst dann, wenn die Drehung um die Längsachse zumindest teilweise von einer rotationsfreien Steckverbindung oder -kupplung wahrgenommen wird.

Ein Auswechseln von Handbrause und/oder Schlauchleitung wird erleichtert, wenn der Brauseanschluss und/oder der Schlauchanschluss ein Kugelgelenk aufweist.

Um das Kugelgelenk möglichst platzsparend in die zwischen Handbrause und Schlauchleitung vorgesehene Kupplung integrieren zu können, ist es vorteilhaft, wenn das eine und vorzugsweise das erste Gelenkteil eine abströmseitige Kupplungsöffnung mit Innengewinde hat, in welches Innengewinde ein an der Handbrause vorgesehenes Außengewinde einschraubbar ist.

Dabei sieht eine bevorzugte Ausführungsform gemäß der Erfindung vor, dass sich an den kugelkalotten- oder kugelsegmentförmigen Stirnendbereich des ersten Gelenkteiles ein hülsenförmiger Teilbereich anschließt, der in seinem stirnseitig offenen und die abströmseitige Kupplungsöffnung umgrenzenden Hülseninnenraum das Innengewinde der Kupplungsöffnung trägt.

Zweckmäßig ist es, wenn das zweite Gelenkteil den Schlauchnippel trägt.

Um die Bauelemente des in die zwischen Handbrause und Schlauchleitung vorgesehene Kupplung integrierten Kugelgelenks auf einfache Weise montieren zu können, ist es zweckmäßig, wenn das Halteelement hülsenförmig ausgestaltet ist und einen Hülseninnenraum hat, der als unrunde und vorzugsweise als Innensechskant ausgebildete Werkzeugangriffsfläche ausgestaltet ist.

Um im Bereich zwischen den Gelenkteilen gut abdichten zu können, ist es zweckmäßig, wenn zwischen dem Halteelement und dem ersten Gelenkteil zumindest eine Ringdichtung vorgesehen ist.

Besonders vorteilhaft ist es, wenn die Handbrause-Garnitur ein Auslaufrohr aufweist, und wenn die Handbrause in einer Bereitschaftstellung an dem Auslaufrohr derart gehalten ist, dass die Kupplung zwischen Handbrause und Schlauchleitung im Rohrinneren des Auslaufrohres angeordnet ist.

Weiterbildungen gemäß der Erfindung ergeben sich aus der Beschreibung in Verbindung mit der Zeichnung und den Ansprüchen. Nachstehend wird die Erfindung anhand eines vorteilhaften Ausführungsbeispieles noch näher beschrieben.

Es zeigt:
- Fig. 1: eine teilweise aufgeschnitten dargestellte Küchenbrausearmatur, an der eine Handbrause mittels eines Pull-Down-Auszuges gehalten und über eine flexible Schlauchleitung an das Wasserleitungsnetz angeschlossen ist,

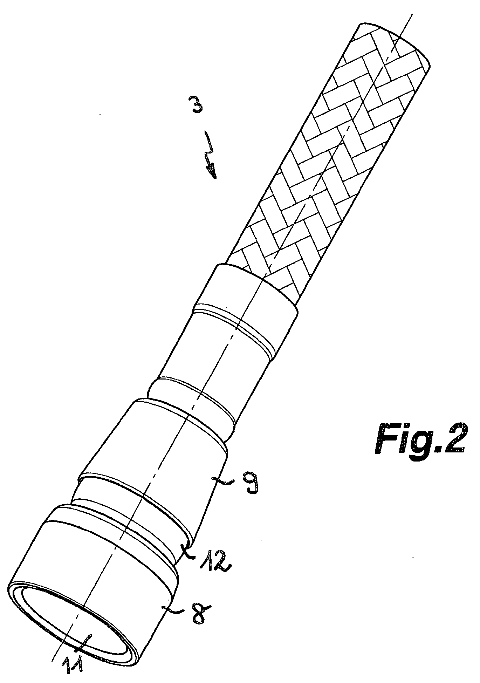

- Fig. 2: die flexible Schlauchleitung der in Fig. 1 gezeigten Küchenbrausearmatur im Bereich ihres der Handbrause zugewandten Schlauchanschlusses in einer perspektivischen Darstellung,
- Fig. 3: eine Küchenbrausearmatur, an der eine Handbrause mittels eines Pull-Down-Auszuges gehalten und über eine flexible Schlauchleitung an das Wasserleitungsnetz angeschlossen ist, wobei die Handbrause zur Sicherung der Ausgangsstellung zumindest einen umfangsseitigen Sicherungsvorsprung hat, der durch Ausrichten und Verdrehen in eine korrespondierende Sicherungsausnehmung am auslaufseitigen Stirnrand des Auslaufrohrs einer sanitären Auslaufarmatur einsetzbar ist,
- Fig. 4: die Küchenbrausearmatur aus Fig. 3 beim Ausrichten und Verdrehen der Handbrause relativ zum Auslaufrohr,
- Fig. 5: die Küchenbrausearmatur aus Fig. 3 und 4 in der Ausgangsstellung, in welcher der an der Handbrause vorgesehene Sicherungsvorsprung in der Sicherungsausnehmung am Auslaufrohr eingesetzt ist,
- Fig. 6: einen, ein erstes und zweites Gelenkteil sowie ein Halteelement aufweisenden Schlauchanschluss für eine Handbrause in einem Längsschnitt, wobei die Längsachsen der relativ zueinander verschwenkbaren Gelenkteile koaxial zueinander angeordnet sind, und
- Fig. 7: den Schlauchanschluss aus Fig. 6 in einer gegenüber Fig. 6 abgewinkelten Schwenkposition von erstem und zweitem Gelenkteil.

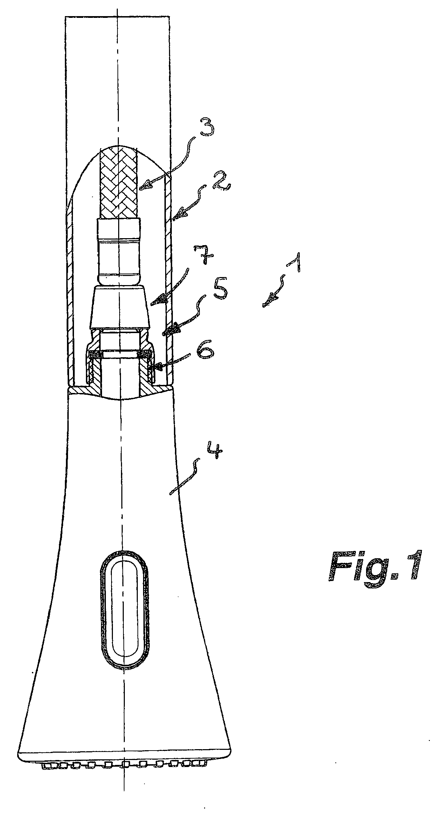

In Fig. 1 ist eine Küchenbrausearmatur 1 dargestellt, die ein Auslaufrohr 2 hat. In dem Auslaufrohr 2 ist eine flexible Schlauchleitung 3 gegen eine Rückstellkraft ausziehbar geführt, die an ihrem abströmseitigen Schlauchleitungsende mit einer Handbrause 4 verbunden ist. Dazu ist eine Kupplung 5 vorgesehen, welche die Handbrause 4 mit der flexiblen Schlauchleitung 3 verbindet.

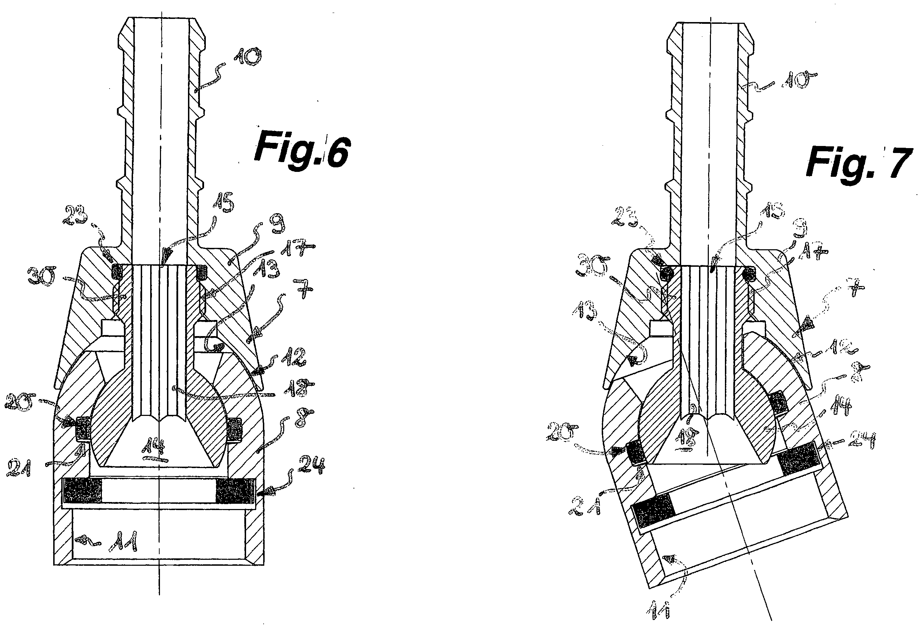

Aus Fig. 1 wird deutlich, dass die zur Verbindung von Handbrause 4 und Schlauchleitung 3 vorgesehene Kupplung 5 hier als Schraubkupplung ausgestaltet ist, die an der Handbrause 4 einen Brauseanschluss mit Außengewinde 6 hat, welches Außengewinde 6 an einem Schlauchanschluss der Schlauchleitung 3 lösbar verbindbar ist. Dabei weist der in den Fig. 6 und 7 in einem Teil-Längsschnitt näher dargestellte Schlauchanschluss ein Kugelgelenk 7 auf. Das Kugelgelenk 7 hat ein erstes und ein zweites Gelenkteil 8, 9, die gelenkig miteinander verbunden sind und miteinander verbundene Flüssigkeitskanäle aufweisen. Während das zweite Gelenkteil 9 an seinem dem ersten Gelenkteil 8 abgewandten Stirnende einen Schlauchnippel 10 trägt, weist das erste Gelenkteil 8 einen hülsenförmigen Teilbereich auf, der in seinem stirnseitig offenen Hülsenin nenraum das Innengewinde 11 trägt. In das Innengewinde 11 des ersten Gelenkteiles 8 kann das an der Handbrause 4 vorgesehene Außengewinde 6 lösbar eingeschraubt werden. Dabei beaufschlagt der dem Gelenkteil 8 zugewandte Stirnrand der Handbrause 4 einen Dichtring 24 im Hülseninnenraum des Gelenkteiles 8 axial dichtend.

Das der Kupplung 5 zugewandte Schlauchende der Schlauchleitung 3 ist auf den Nippel 10 aufgeschoben und dort mittels einer Quetschhülse 25 sicher und fest gehalten.

Aus den Fig. 1, *11 und 12* ist erkennbar, dass das erste Gelenkteil 8 mit einem kugelkalotten- beziehungsweise kugelsegmentförmigen oder dergleichen kugeligen Stirnendbereich 12 seiner Wandung zwischen einer formangepassten Gelenkpfanne 13 am zweiten Gelenkteil 9 einerseits und einem Gelenkkopf 14 an einem in der Innenhöhlung des ersten Gelenkteiles 8 vorgesehenen Halteelement 15 andererseits verschwenkbar gehalten ist. Das Halteelement 15 durchsetzt mit einem am zweiten Gelenkteil 9 angreifenden Verbindungsschaft 30 eine Durchstecköffnung 31 des ersten Gelenkteiles 8 und verbindet die Flüssigkeitskanäle des ersten Gelenkteiles 8 sowie des zweiten Gelenkteiles 9 miteinander.

An den kugeligen Stirnendbereich 12 des ersten Gelenkteiles 8 schließt sich abströmseitig der hülsenförmige Teilbereich an, der in seinem Hülseninnenraum das Innengewinde 11 trägt.

Das Halteelement 15 ist mit einem Außengewinde 17 in ein Innengewinde im zweiten Gelenkteil 9 einschraubbar, wobei der Hülseninnenraum des Halteelements 15 als vorzugsweise unrunde Werkzeugangriffsfläche und hier als Innensechskant 18 ausgestaltet ist. Das Außengewinde 17 des Halteelements 15 ist in das Innengewinde im zweiten Gelenkteil 9 lösbar einschraubbar und darin wasserdicht verbunden. Das Halteelement 15 ist an seinem an das Außengewinde 17 angrenzenden Endbereich mittels dem Dichtring 23 gegenüber dem Gelenkteil 9 radial und/oder axial abgedichtet.

In den Fig. 6 und 7 *ist gut erkennbar,* dass zwischen dem Halteelement 15 und dem ersten Gelenkteil 8 zumindest eine Ringdichtung 20 vorgesehen ist. Diese Ringdichtung 20 ist zwischen dem ersten Gelenkteil 8 und dem Halteelement 15 wirksam. Dazu ist am Innenumfang des ersten Gelenkteiles 8 eine Ringnut 21 zur Aufnahme der Ringdichtung 20 vorgesehen.

In Fig. 1 ist die Handbrause 4 in einer Bereitschaftsstellung dargestellt, in welcher Bereitschaftsstellung die Handbrause 4 derart am Auslaufrohr 2 gehalten ist, dass die Kupplung 5 zwischen Handbrause 4 und Schlauchleitung 3 vollständig im Rohrinneren des Auslaufrohres 2 verdeckt angeordnet ist. Da das in die Kupplung 5 integrierte Kugelgelenk 7 nicht nur eine Verschwenkbarkeit, sondern auch eine Verdrehbarkeit der Handbrause 4 relativ zur Längsachse der Schlauchleitung 3 gewährleistet, zeichnet sich die mit der Schlauchleitung 3 verbundene Handbrause 4 durch eine hohe Gelenkigkeit und Verdrehbarkeit aus, ohne dass ein unbeabsichtigtes Lösen der zwischen Handbrause 4 und Schlauchleitung 3 vorgesehenen Schraubverbindung zu befürchten wäre, und ohne dass es zu den üblichen handgriffnahen Schlauchschädigungen durch Bewegungsüberlastungen kommt.

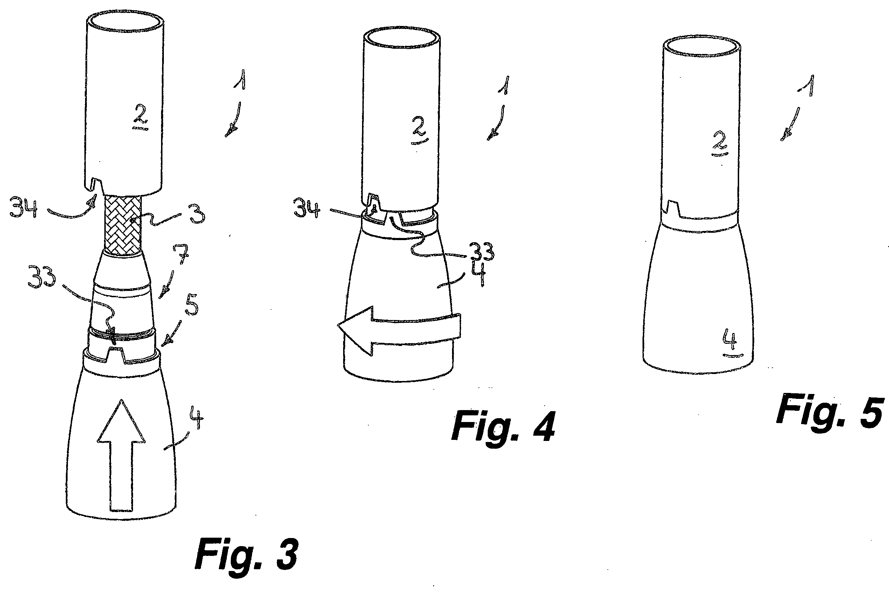

Aus den Fig. 3 bis 5 wird deutlich, dass bei Küchenbrausearmaturen die in Fig. 5 gezeigte Ausgangsstellung zwischen der Handbrause 4 und dem die Handbrause 4 in sich aufnehmenden Auslaufrohr 2 der Küchenbrausearmatur 1 gesichert werden kann. Am Außenumfang der Handbrause 4 ist dazu zumindest ein vorstehender Sicherungsvorsprung 33 vorgesehen, der durch Ausrichten und Verdrehen in eine korrespondierende Sicherungsausnehmung 34 am auslaufseitigen Stirnrand des Aus laufrohres 2 einsetzbar ist. Aus einem Vergleich der Fig. 3 bis 5 ist erkennbar, dass die mit der flexiblen Schlauchleitung 3 verbundene Handbrause 4 soweit zu verdrehen ist, bis der zumindest eine Sicherungsvorsprung 33 und die ihm zugeordnete Sicherungsausnehmung 34 miteinander fluchten und die Handbrause 4 in das Rohrinnere des Auslaufrohres 2 eingesetzt werden kann, derart, dass dabei auch der Sicherungsvorsprung 33 in die Sicherungsausnehmung 34 eingreift.

Durch das Heraus- und Herunterziehen der Handbrause 4 wird diese aus ihrer Ausgangsstellung gemäß Fig. 5 entfernt. Beim Zurückschieben trifft man diese Lagefixierung, welche die Handbrause 4 in einer bestimmten Vorzugsausrichtung im Auslaufrohr der Küchenbrausearmatur 1 hält, in der Regel nicht direkt, sodass die Handbrause 4 dann noch von Hand verdreht werden muss, bis sich der Sicherungsvorsprung 33 in der Sicherungsausnehmung 34 befindet, bevor die Handbrause 4 mit dem dazu bestimmten Teilbereich vollständig in das Auslaufrohr zurückgeschoben werden kann. Da dabei die Handbrause 4 relativ zur Schlauchleitung 3 verdreht werden muss, kann diese Drehbewegung entgegen der Befestigungsrichtung der zwischen Brauseanschluss und Schlauchleitung 3 vorgesehenen Schraubverbindung erfolgen. Erfolgt diese Drehbewegung entgegen der Befestigungsrichtung der Schraubverbindung, so löst man diese Schraubverbindung unweigerlich, da die Torsionssteifigkeit der Schlauchleitung 3 und die Reibung im Auslaufrohr ein Gegenmoment bewirkt. Durch Lösen der Schraubverbindung wird sowohl die Vorspannung der Dichtung 38 und damit die Beweglichkeit des Kugelgelenks 7 beeinflusst, als auch die Dichtigkeit in diesem Bereich.

Demgegenüber ist es ein besonderer Vorteil des in den Fig. 11 und 12 näher dargestellten Ausführungsbeispieles, dass die Haltefunktion einerseits und die Verdrehbarkeit andererseits getrennt voneinander sind, sodass die Handbrause 4 gegenüber der Schlauchleitung 3 verdreht werden kann, ohne dass ein unbeabsichtigtes Lösen einer im Bereich der Kupplung 5 vorgesehenen Schraubverbindung zu befürchten ist. Bei dem in Fig. 10 gezeigten Schlauchanschluss ein festes Anziehen der zwischen dem Brauseanschluss und der Überwurfmutter 37 vorgesehenen Schraubverbindung stets auch zu einer Verringerung der Beweglichkeit des aus Gelenkkugel 35 und Gelenkpfanne 36 bestehenden Kugelgelenks 7 führen.

In den Fig. 6 und 7 ist dargestellt, dass der am Halteelement 15 vorgesehene Gelenkkopf 14 eine kugelsegmentförmige oder dergleichen kugelige Außenkontur hat. Aus dem in Fig. 6 und 7 gezeigten Ausführungsbeispiel des Schlauchanschlusses wird deutlich, dass die zur Aufnahme der Ringdichtung 20 bestimmte Ringnut 21 am Innenumfang des ersten Gelenkteils 8 in Relation zum Halteelement 15 annähernd derart im Bereich des Äquators oder des größten Außenumfangs der kugeligen Außenkontur des am Halteelement 15 vorgesehenen Gelenkkopfes 14 angeordnet ist, dass diese Ringdichtung 20 nur einer radialen Belastung -, nicht aber einer axialen Belastung ausgesetzt ist, und dass die Ringdichtung 20 daher nur geringen Reibkräften unterliegt. Durch diese besondere Anordnung der Ringdichtung 20 bei dem in Fig. 6 und 7 gezeigten Ausführungsbeispiel unterliegt die Ringdichtung 20 auch bei höheren Drücken geringeren Reibkräften und eine leichtgängige Verschwenkbarkeit des ersten Gelenkteiles 8 in Relation zum zweiten Gelenkteil 9 sowie zum Halteelement 15 wird nahezu druckunabhängig gewährleistet. Da die im Bereich des Äquators angeordnete Nut praktisch rechteckig in den Innenumfang des ersten Gelenkteiles 8 eingearbeitet werden kann, ist diese Nut 21 einfacher herzustellen und auszumessen. Aus den Fig. 6 und 7 wird deutlich, dass das Halteelement 15 bei dem in Fig. 6 und 7 gezeigten Ausführungsbeispiel länger ausgestaltet werden kann und dass somit die Reib- und Kontaktfläche des ersten Gelenkteiles 8 am Haltelement 15 einerseits und am zweiten Gelenkteil 9 andererseits entsprechend größer ausgestaltet werden kann, wodurch einem geringeren Verschleiß entgegengewirkt wird.

## Patentansprüche

1. Handbrause-Garnitur mit einer Handbrause (4), die über eine Kupplung (5) mit einer flexiblen Schlauchleitung (3) verbunden ist, wobei die zur Verbindung von Handbrause (4) und Schlauchleitung (3) vorgesehene Kupplung einen Schlauchanschluss mit einem Kugelgelenk (7) aufweist, welches ein erstes und ein zweites Gelenkteil (8,9) hat, die gelenkig miteinander verbunden sind und miteinander verbundene Flüssigkeitskanäle aufweisen und von denen ein Gelenkteil (9) einen Schlauchnippel (10) trägt und am anderen Gelenkteil (8) ein Innen- oder Außengewinde (11) vorgesehen ist, wobei das erste Gelenkteil (8) mit einem kugelkalotten- oder kugelsegmentförmigen Stirnendbereich (12) seiner Wandung zwischen einer formangepassten Gelenkpfanne (13) am zweiten Gelenkteil (9) einerseits und einem Gelenkkopf (14) an einem in einer Innenhöhlung des ersten Gelenkteiles (8) vorgesehenen Halteelement (15) andererseits verschwenkbar gehalten ist, wobei das Halteelement (15) mit einem am zweiten Gelenkteil (9) angreifenden Verbindungsschaft (16) eine Durchstecköffnung des ersten Gelenkteiles (8) durchsetzt, wobei das Halteelement (15) die Flüssigkeitskanäle des ersten Gelenkteiles (8) sowie des zweiten Gelenkteiles (9) miteinander verbindet, und wobei der Gelenkkopf (14) des Haltelements (15) eine kugelsegmentförmige Außenkontur hat, **dadurch gekennzeichnet, dass** eine Ringnut (21) im Bereich des größten Außenumfangs der kugelsegmentförmigen Außenkontur des Gelenkkopfes (14) am Halteelement (15) oder des größten Innenumfangs des kugelkalotten- oder kugelsegmentförmigen Stirnendbereichs des ersten Gelenkteiles (8) angeordnet ist, und dass in dieser Ringnut (21) eine Ringdichtung (20) vorgesehen ist.

2. Handbrause-Garnitur nach Anspruch 1, **dadurch gekennzeichnet, dass** die zur Verbindung von Handbrause (4) und Schlauchleitung (3) vorgesehene Kupplung (5) als Schraubkupplung ausgebildet ist, die an der Handbrause (4) einen Brauseanschluss mit Außen- oder Innengewinde (6) hat, welches Außen- oder Innengewinde (6) mit dem, an dem ersten Gelenkteil (8) des Schlauchanschlusses der Schlauchleitung (3) vorgesehenen Innen- oder Außengewinde (11) vorzugsweise lösbar verbindbar ist.

3. Handbrause-Garnitur nach Anspruch 2, **dadurch gekennzeichnet, dass** das eine und vorzugsweise das erste Gelenkteil (8) eine abströmseitige Kupplungsöffnung mit Innengewinde (11) hat, in welches Innengewinde (11) ein an der Handbrause (4) vorgesehenes Außengewinde (6) einschraubbar ist.

4. Handbrause-Garnitur nach Anspruch 2 oder 3, **dadurch gekennzeichnet, dass** sich an den kugelkalotten- oder kugelsegmentförmigen Stirnendbereich (12) des ersten Gelenkteiles (8) ein hülsenförmiger Teilbereich anschließt, der in seinem stirnseitig offenen und die abströmseitige Kupplungsöffnung umgrenzenden Hülseninnenraum das Innengewinde (11) der Kupplungsöffnung trägt.

5. Handbrause-Garnitur nach einem der Ansprüche 1 bis 4, **dadurch gekennzeichnet, dass** das zweite Gelenkteil (9) den Schlauchnippel (10) trägt.

6. Handbrause-Garnitur nach einem der Ansprüche 1 bis 5, **dadurch gekennzeichnet, dass** das Halteelement (15) mit einem Außengewinde (17) in ein Innengewinde im zweiten Gelenkteil (9) einschraubbar ist.

7. Handbrause-Garnitur nach einem der Ansprüche 1 bis 6, **dadurch gekennzeichnet, dass** das Haltelement (15) hülsenförmig ausgestaltet ist und einen Hülseninnenraum hat, der als unrunde und vorzugsweise als Innensechskant (18) ausgebildete Werkzeugangriffsfläche ausgestaltet ist.

8. Handbrause-Garnitur nach Anspruch 6 oder 7, **dadurch gekennzeichnet, dass** das Außengewinde (17) des Halteelements (15) in das Innengewinde im zweiten Gelenkteil (9) lösbar einschraubbar oder darin wasserdicht verbunden ist.

9. Handbrause-Garnitur nach einem der Ansprüche 1 bis 8, **dadurch gekennzeichnet, dass** zwischen dem Halteelement (15) und dem ersten Gelenkteil (8) zumindest eine weitere Ringdichtung (23) vorgesehen ist.

10. Handbrause-Garnitur nach einem der Ansprüche 1 bis 9, **dadurch gekennzeichnet, dass** die Handbrause-Garnitur ein Auslaufrohr (2) aufweist und dass die Handbrause (4) in einer Bereitschaftstellung im Rohrinneren des Auslaufrohr (2) derart gehalten ist, dass die Kupplung (5) zwischen Handbrause (4) und Schlauchleitung (3) im Rohrinneren des Auslaufrohres (2) angeordnet ist.

## Claims

1. Handheld showerhead fitting having a handheld showerhead (4) which is connected via a coupling (5) to a flexible hose line (3), wherein the coupling provided to connect the handheld showerhead (4) and hose line (3) has a hose connector with a ball joint (7) which has a first and a second joint part (8, 9) which are connected to one another in an articulated manner and comprise mutually connected fluid ducts and of which one joint part (9) bears a hose nipple (10) and on the other joint part (8) an internal or external thread (11) is provided, wherein the first joint part (8) is pivotably held with a ball-cap- or ball-segment-shaped end face region (12) of its wall between a joint socket (13) of matching shape on the second joint part (9) on the one hand and a joint head (14) on a holding element (15) provided in an internal cavity of the first joint part (8) on the other hand, wherein, with a connecting shaft (16) engaging on the second joint part (9), the holding element (15) passes through a through-orifice in the first joint part (8), wherein the holding element (15) connects the fluid ducts of the first joint part (8) and of the second joint part (9) to one another, and wherein the joint head (14) of the holding element (15) has an outer contour in the shape of a ball segment, **characterised in that** an annular groove (21) is disposed in the region of the largest outer circumference of the ball segment-shaped outer contour of the joint head (14) on the holding element (15) or of the largest inner circumference of the ball-cap- or ball-segment-shaped end face region of the first joint part (8) and that an annular seal (20) is provided in this annular groove (21).

2. Handheld showerhead fitting as claimed in claim 1, **characterised in that** the coupling (5) provided to connect the handheld showerhead (4) and hose line (3) is formed as a screw coupling which, on the handheld showerhead (4), has a showerhead connector with an external or internal thread (6), this external or internal thread (6) being preferably releasably connectable to the internal or external thread (11) provided on the first joint part (8) of the hose connector of the hose line (3).

3. Handheld showerhead fitting as claimed in claim 2, **characterised in that** one, preferably the first, joint part (8) has a downstream-side coupling orifice with an internal thread (11), into which internal thread (11) an external thread (6) provided on the handheld showerhead (4) can be screwed.

4. Handheld showerhead fitting as claimed in claim 2 or 3, **characterised in that** a sleeve-like partial region adjoins the ball-cap- or ball-segment-shaped end face region (12) of the first joint part (8) and bears the internal thread (11) of the coupling orifice in its sleeve interior space which is open at the end face and defines the downstream-side coupling orifice.

5. Handheld showerhead fitting as claimed in any one of claims 1 to 4, **characterised in that** the second joint part (9) bears the hose nipple (10).

6. Handheld showerhead fitting as claimed in any one of claims 1 to 5, **characterised in that** the holding element (15) can be screwed with an external thread (17) into an internal thread in the second joint part (9).

7. Handheld showerhead fitting as claimed in any one of claims 1 to 6, **characterised in that** the holding element (15) is in the form of a sleeve and has a sleeve interior space which is formed as a tool engagement surface which is non-round and is preferably formed as a hexagonal socket (18).

8. Handheld showerhead fitting as claimed in claim 6 or 7, **characterised in that** the external thread (17) of the holding element (15) can be releasably screwed into the internal thread in the second joint part (9) or is connected therein in a water-tight manner.

9. Handheld showerhead fitting as claimed in any one of claims 1 to 8, **characterised in that** at least one further annular seal (23) is provided between the holding element (15) and the first joint part (8).

10. Handheld showerhead fitting as claimed in any one of claims 1 to 9, **characterised in that** the handheld showerhead fitting has an outlet pipe (2) and that the handheld showerhead (4) is held in a ready position in the pipe interior of the outlet pipe (2) such that the coupling (5) between the handheld showerhead (4) and hose line (3) is disposed in the pipe interior of the outlet pipe (2).

## Revendications

1. Garniture de douchette avec une douchette (4), qui est connectée par un raccord (5) à un tuyau flexible (3), dans laquelle le raccord prévu pour la connexion de la douchette (4) et du tuyau flexible (3) présente un raccord de tuyau flexible avec une articulation à rotule (7), qui comporte une première et une deuxième parties d'articulation (8, 9), qui sont assemblées de façon articulée l'une à l'autre et qui présentent des canaux de liquide reliés l'un à l'autre et dont une partie d'articulation (9) porte un mamelon de tuyau flexible (10) et il est prévu sur l'autre partie d'articulation (8) un filet intérieur ou extérieur (11), dans laquelle la première partie d'articulation (8) est maintenue de façon pivotante avec une région d'extrémité frontale (12) de sa paroi en forme de calotte sphérique ou de segment de sphère entre une cuvette d'articulation de forme adaptée (13) sur la deuxième partie d'articulation (9) d'une part et une tête d'articulation (14) sur un élément de maintien (15) prévu dans une cavité intérieure de la première partie d'articulation (8) d'autre part, dans laquelle l'élément de maintien (15) traverse avec une tige de liaison (16) attachée à la deuxième partie d'articulation (9) une ouverture de passage de la première partie d'articulation (8), dans laquelle l'élément de maintien (15) relie l'un à l'autre les canaux de liquide de la première partie d'articulation (8) et de la deuxième partie d'articulation (9), et dans laquelle la tête d'articulation (14) de l'élément de maintien (15) présente un contour extérieur en forme de segment de sphère, **caractérisée en ce qu'**une rainure annulaire (21) est disposée dans la région du plus grand périmètre extérieur du contour extérieur en forme de segment de sphère de la tête d'articulation (14) sur l'élément de maintien (15) ou du plus grand périmètre intérieur de la région d'extrémité frontale en forme de calotte sphérique ou de segment de sphère de la première partie d'articulation (8), et **en ce qu'**il est prévu un joint torique (20) dans cette rainure annulaire (21).

2. Garniture de douchette selon la revendication 1, **caractérisée en ce que** le raccord (5) prévu pour la connexion de la douchette (4) et du tuyau flexible (3) est réalisé sous la forme d'un raccord vissé, qui porte sur la douchette (4) un raccord de douchette avec un filet extérieur ou intérieur (6), filet extérieur ou intérieur (6) qui peut être assemblé, de préférence de façon démontable, avec le filet intérieur ou extérieur (11) prévu sur la première partie d'articulation (8) du raccord de tuyau flexible du tuyau flexible (3).

3. Garniture de douchette selon la revendication 2, **caractérisée en ce qu'**une et de préférence la première partie d'articulation (8) présente une ouverture de raccord aval avec un filet intérieur (11), filet intérieur (11) dans lequel un filet extérieur (6) prévu sur la douchette (4) peut être vissé.

4. Garniture de douchette selon la revendication 2 ou 3, **caractérisée en ce qu'**il se raccorde à la région d'extrémité frontale en forme de calotte sphérique ou de segment de sphère (12) de la première partie d'articulation (8) une région partielle en forme de douille, qui porte dans son espace intérieur ouvert frontalement et délimitant l'ouverture de raccord aval le filet intérieur (11) de l'ouverture de raccord.

5. Garniture de douchette selon l'une quelconque des revendications 1 à 4, **caractérisée en ce que** la deuxième partie d'articulation (9) porte le mamelon de tuyau flexible (10).

6. Garniture de douchette selon l'une quelconque des revendications 1 à 5, **caractérisée en ce que** l'élément de maintien (15) peut être vissé avec un filet extérieur (17) dans un filet intérieur dans la deuxième partie d'articulation (9).

7. Garniture de douchette selon l'une quelconque des revendications 1 à 6, **caractérisée en ce que** l'élément de maintien (15) est configuré en forme de douille et présente un espace intérieur de douille, qui est réalisé en forme de face non ronde et de préférence d'hexagone intérieur (18) pour l'application d'un outil.

8. Garniture de douchette selon la revendication 6 ou 7, **caractérisée en ce que** le filet extérieur (17) de l'élément de maintien (15) peut être vissé de façon démontable dans le filet intérieur dans la deuxième partie d'articulation (9) ou peut être assemblé de manière étanche dans celle-ci.

9. Garniture de douchette selon l'une quelconque des revendications 1 à 8, **caractérisée en ce qu'**il est prévu au moins un autre joint torique (23) entre l'élément de maintien (15) et la première partie d'articulation (8).

10. Garniture de douchette selon l'une quelconque des revendications 1 à 9, **caractérisée en ce que** la garniture de douchette présente un tube de sortie (2) et **en ce que** la douchette (4) est maintenue dans une position d'attente dans l'intérieur du tube de sortie (2), de telle manière que le raccord (5) entre la douchette (4) et le tuyau flexible (3) soit disposé à l'intérieur du tube de sortie (2).
